# EUROPEAN PATENT SPECIFICATION

(11) **EP 1 589 084 B1**
(45) Date of publication and mention of the grant of the patent: **31.10.2007**
(21) Application number: 05006415.3
(22) Date of filing: 23.03.2005
(51) Int. Cl.: C09J 7/00, B41F 35/00, G03F 7/00

(54) **Pressure-sensitive adhesive sheet for removal of fluorescent substances**
Haftklebebahn zur Entfernung von Fluoreszierenden Substanzen
Feuille adhésive sensible à la pression destinée à enlever des substances fluorescentes

(30) Priority: 29.03.2004 JP 2004094906; 23.06.2004 JP 2004185325
(43) Date of publication of application: 26.10.2005
(73) Proprietor: NITTO DENKO CORPORATION, Ibaraki-shi, Osaka 567-8680 (JP)
(72) Inventor: Buzoujima, Yasushi, Ibaraki-shi Osaka 567-8680 (JP); Kouno, Shinichi, Ibaraki-shi Osaka 567-8680 (JP); Kume, Katsuya, Ibaraki-shi Osaka 567-8680 (JP); Banba, Tomohide, Ibaraki-shi Osaka 567-8680 (JP); Yoneda, Masanobu, Ibaraki-shi Osaka 567-8680 (JP); Kai, Makoto, Ibaraki-shi Osaka 567-8680 (JP); Hatanaka, Itsuhiro, Ibaraki-shi Osaka 567-8680 (JP)
(74) Representative: Vossius & Partner

(56) References cited:
- EP-A- 1 078 968
- EP-A- 1 172 209
- WO-A-03/018702
- US-A- 6 106 992

## Description

The present invention relates to a pressure-sensitive adhesive sheet used for removing unnecessary fluorescent substances adhering to a barrier rib of a plasma display panel back substrate.

As thin and flat large displays, plasma display panels (referred to hereinafter as "PDP") together with liquid crystal displays attract attention in recent years.

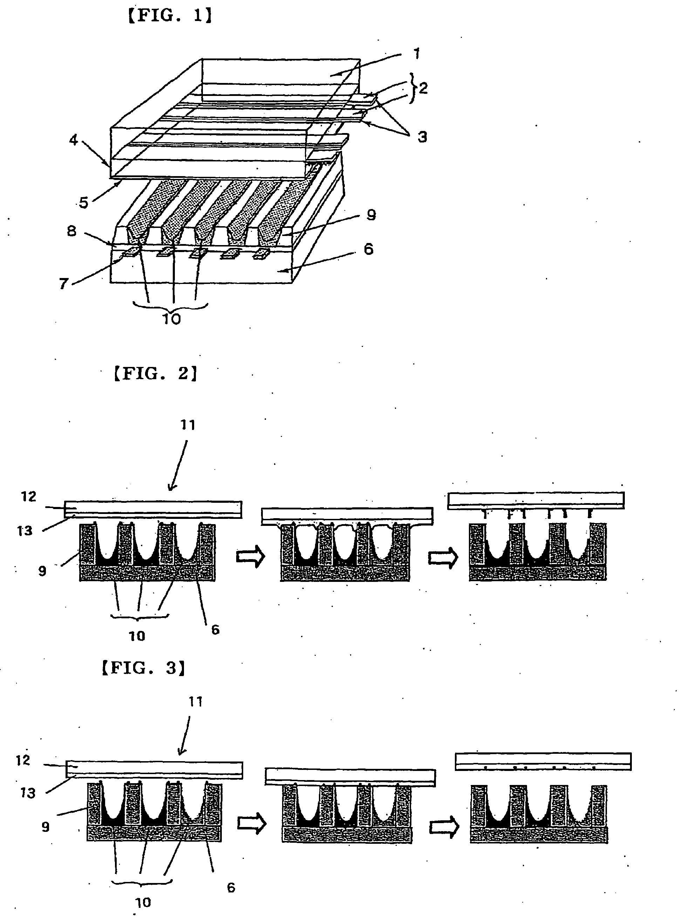

Fig. 1 shows one example of PDP of 3-electrode-surface-discharge type. In Fig. 1, a sustain electrode (display electrode) 2 consisting of a transparent electroconductive film is formed on a front substrate 1 serving as a display surface, and a bus electrode 3 consisting of a metallic film of small width compensating for electrical conductivity is formed on the sustain electrode 2. Further, a dielectric layer 4 is formed so as to cover the sustain electrode 2 and bus electrode 3, and MgO film (protective layer) 5 is formed so as to cover the dielectric layer 4.

On one hand, an address electrode (data electrode) 7 consisting of a metallic film is formed on a back substrate 6, and a dielectric layer 8 is formed on the address electrode 7. A barrier rib 9 for maintaining a predetermined distance between the front substrate 1 and the back substrate 6 to maintain a discharge space therebetween is formed between the address electrodes 7. Fluorescent layers 10 of 3 primary colors (red, green and blue) are formed to cover the dielectric layer 8 and barrier rib 9. A rare gas is encapsulated in the discharge space, and each intersection of the address electrode 7 and sustain electrode 2 constitutes a pixel cell.

By red, green and blue fluorescent substances excited by vacuum ultraviolet rays generated by gas electrical discharge, the fluorescent layers are formed inside of the discharge cell divided with the barrier rib. The fluorescent substance also adheres particularly to a side wall of the barrier rib in order to increase the emitting surface area.

The process for forming the fluorescent layer is generally a screen printing method, a photosensitive paste method or a method of coating with a fluorescent paste via an ink jet nozzle or a spinneret, among which the screen printing method is mainly used at present. The screen printing method is a method wherein a fluorescent paste having a fluorescent substance dispersed in a resin such as ethylene cellulose or a solvent such as terpineol is printed and dried repeatedly for each of the colors to form a fluorescent paste layer. Thereafter, the fluorescent paste layer is burned to form a fluorescent layer. In pattern printing of the fluorescent paste, however, the fluorescent paste adheres to the top surface of the barrier rib because of dimensional accuracy of a screen printing plate etc., thus causing problems such as mixed color.

To solve the problem, JP-A 11-73880 discloses a method of removing fluorescent substances present on the top surface of a barrier rib by sticking the fluorescent substances on a pressure-sensitive adhesive material. As the pressure-sensitive adhesive material, a pressure-sensitive adhesive layer formed on a base material is described.

In recent years, the shape of the barrier rib is transferred from the stripe type to the waffle or boxy type in order to increase brightness. When a fluorescent paste layer is formed inside of a discharge cell divided with the barrier rib of such special shape by the screen printing method, the fluorescent substance easily adheres to the top surface of the barrier rib, as compared with the stripe-type barrier rib. Particularly, in the barrier rib of such particular special shape, the pressure-sensitive adhesive material described in JP-A 11-73880 has a problem that not only the fluorescent substances on the top surface of the barrier rib but also a part of the fluorescent substances on the side of the barrier rib is removed.

To solve the problem in the related art, the object of the present invention is to provide a pressure-sensitive adhesive sheet for removal of fluorescent substances, which removes fluorescent substances on the top surface of a barrier rib but does not remove fluorescent substances on the side of the barrier rib.

As extensive study to solve the problem, the present inventors found that the following pressure-sensitive adhesive sheet for removal of fluorescent substances (also referred to hereinafter as "pressure-sensitive adhesive sheet") can solve the problem, to arrive at the completion of the present invention.

That is, the present invention relates to a pressure-sensitive adhesive sheet used for removing fluorescent substances adhering to a barrier rib of a plasma display panel back substrate and having at least a pressure-sensitive adhesive layer on one side of a base material, wherein the thickness of the pressure-sensitive adhesive layer is more than 3 µm and less than 20 µm, the glass transition temperature (Tg) of a base polymer in the pressure-sensitive adhesive as a material forming the pressure-sensitive adhesive layer is lower than -30°C and which exhibits an adhesion of 4 to 10 [N/25 mm sheet width] upon release under the conditions of 23°C, a peel angle of 180° and a peel rate of 300 mm/min.

The present inventors found that unnecessary fluorescent substances on only the top surface of the barrier rib could be removed by regulating the thickness of the pressure-sensitive adhesive layer in the range of more than 3 µm and less than 20 µm. The reason is not evident, but is estimated as follows: When the pressure-sensitive adhesive layer 13 is too thick as shown in Fig. 2, the pressure-sensitive adhesive layer 13 is significantly deformed upon pushing the pressure-sensitive adhesive sheet 11 against the top surface of the barrier rib, and thus the pressure-sensitive adhesive layer 13 is contacted not only with fluorescent substances on the top surface of the barrier rib but also with fluorescent substances on the side of the barrier rib. It is accordingly considered that the fluorescent substances on the side of the barrier rib, with which the pressure-sensitive adhesive layer 13 was contacted, are released upon release of the pressure-sensitive adhesive sheet 11. On the other hand, when the thickness of the pressure-sensitive adhesive layer 13 is regulated in the range of more than 3 µm and less than 20 µm as shown in Fig. 3, the pressure-sensitive adhesive layer 13 is not so greatly deformed upon pushing the pressure-sensitive adhesive 11 against the top surface of the barrier rib, and thus the pressure-sensitive adhesive layer 13 is hardly contacted with fluorescent substances on the side of the barrier rib. Accordingly, it is considered that the fluorescent substances on the side of the barrier rib are not released upon release of the pressure-sensitive adhesive sheet 11.

In the present invention, the thickness of the pressure-sensitive adhesive layer is preferably 5 to 15 µm, more preferably 5 to 10 µm. When the thickness of the pressure-sensitive adhesive layer is less than 3 µm, the pressure-sensitive adhesive layer is hardly deformed, thus decreasing the contact area thereof with fluorescent substances, and therefore the fluorescent substances adhering to the top surface of the barrier rib cannot be completely removed. On the other hand, when the thickness of the pressure-sensitive adhesive layer is 20 µm or more, the pressure-sensitive adhesive layer is easily deformed and also contacted with fluorescent substances on the side of the barrier rib, thus removing not only fluorescent substances on the top surface of the barrier rib but also a part of fluorescent substances on the side of the barrier rib.

The adhesion of the pressure-sensitive adhesive sheet released under the conditions of 23°C, a peel angle of 180° and a peel rate of 300 mm/min is 4 to 10 (N/25 mm sheet width). When the adhesion is lower than 3 (N/25 mm sheet width), the adhesion is insufficient so that given the pressure-sensitive adhesive layer of thickness in the above range, fluorescent substances on the top surface of the barrier rib tend to be hardly completely removed. On the other hand, when the adhesion is higher than 15 (N/25 mm sheet width), the barrier rib is subject to significant bending force upon release, which may cause destruction of the barrier rib. The method of measuring the adhesion is described in detail in the Examples.

In the present invention, the glass transition temperature (Tg) of a base polymer in the pressure-sensitive adhesive as a material forming the pressure-sensitive adhesive layer is lower than -30°C, preferably -35°C or less. When a base polymer having a Tg of lower than -30°C is used, the pressure-sensitive adhesive layer has high adhesion even if the layer is thin, thus achieving reliable removal of unnecessary fluorescent substances on the top surface of the barrier rib. When the Tg of the base polymer is -30°C or higher, the pressure-sensitive adhesive layer becomes rigid to reduce adhesion, and thus fluorescent substances on the top surface of the barrier rib tend to be hardly completely removed.

In the pressure-sensitive adhesive sheet for removal of fluorescent substances according to the present invention, an antistatic layer is preferably arranged on the surface of the base material.

In the pressure-sensitive adhesive sheet for removal of fluorescent substances according to the present invention, a protective film is preferably arranged on the surface of the pressure-sensitive adhesive layer.

The present invention also relates to a method of removing fluorescent substances on the top surface of a barrier rib of a plasma display panel back substrate, which comprises bringing the pressure-sensitive adhesive layer of the pressure-sensitive adhesive sheet for removal of fluorescent substances into contact with the top surface of a barrier rib of a plasma display panel back substrate, and then releasing the pressure-sensitive adhesive sheet to remove fluorescent substances on the top surface of the barrier rib.

Further, the present invention relates to a method of producing a plasma display panel back substrate, which comprises bringing the pressure-sensitive adhesive layer of the pressure-sensitive adhesive sheet for removal of fluorescent substances into contact with the top surface of a barrier rib of a plasma display panel back substrate, and then releasing the pressure-sensitive adhesive sheet to remove fluorescent substances on the top surface of the barrier rib, as well as a plasma display panel back substrate obtained by the production method.

Further, a plasma display panel using the plasma display panel back substrate described above is disclosed.
Fig. 1 is a perspective view showing the structure of a PDP of 3-electrode-surface-discharge type;
Fig. 2 is a diagram showing one example of the method of removing fluorescent substances by using a conventional pressure-sensitive adhesive sheet; and
Fig. 3 is a diagram showing one example of the method of removing fluorescent substances by using the pressure-sensitive adhesive sheet of the present invention.

Hereinafter, the present invention is described in more detail.

The pressure-sensitive adhesive sheet of the present invention is used for removing fluorescent substances adhering to a barrier rib of a PDP back substrate, and has at least a pressure-sensitive adhesive layer of more than 3 µm and less than 20 µm in thickness on one side of a base material.

The material forming the pressure-sensitive adhesive layer is not particularly limited, and examples include various kinds of pressure-sensitive adhesives such as an acrylic pressure-sensitive adhesive, a synthetic rubber-based pressure-sensitive adhesive, a natural rubber-based pressure-sensitive adhesive and a silicone-based pressure-sensitive adhesive.

The acrylic pressure-sensitive adhesive comprises an acrylic polymer as a base polymer, and the monomer used in the acrylic polymer includes various alkyl (meth)acrylates. Examples thereof include alkyl (meth)acrylates (for example, C1 to C20 alkyl esters such as methyl ester, ethyl ester, propyl ester, butyl ester, 2-ethylhexyl ester, isooctyl ester, isononyl ester, isodecyl ester, dodecyl ester, lauryl ester, tridecyl ester, pentadecyl ester, hexadecyl ester, heptadecyl ester, octadecyl ester, nonadecyl ester, eicosyl ester etc.), and these can be alone or as a mixture thereof.

Together with the alkyl (meth)acrylates, carboxyl group-containing monomers such as (meth)acrylic acid, itaconic acid etc.; hydroxyl group-containing monomers such as hydroxyethyl (meth)acrylate, hydroxypropyl (meth)acrylate etc.; amide group-containing monomers such as N-methylol acrylamide etc.; cyano group-containing monomers such as (meth)acrylonitrile etc.; epoxy group-containing monomers such as glycidyl (meth)acrylate etc.; vinyl esters such as vinyl acetate etc.; and styrene monomers such as styrene, α-methyl styrene etc. can be used as copolymerizable monomers. The method of polymerizing the acrylic polymer is not particularly limited, and known polymerization methods such as solution polymerization, emulsion polymerization, suspension polymerization, UV polymerization etc. can be used.

The base polymer in the rubber-based pressure-sensitive adhesive includes, for example, natural rubber, isoprene rubber, styrene-butadiene rubber, regenerated rubber, polyisobutylene rubber, butadiene acrylonitrile rubber, styrene-isoprene-styrene rubber, styrene-butadiene-styrene rubber etc.

The base polymer in the silicone-based pressure-sensitive adhesive includes, for example, dimethyl polysiloxane, diphenyl polysiloxane etc.

The glass transition temperature (Tg) of the base polymer is lower than -30°C. For example, the Tg of the acrylic polymer can be regulated in the above range by using, as the monomer, C4 to C12 alkyl acrylates such as butyl ester, 2-ethylhexyl ester, isooctyl ester, isononyl ester, isodecyl ester, dodecyl ester and lauryl ester and C12 to C13 alkyl methacrylates such as lauryl ester and tridecyl ester.

To improve cohesion, a crosslinking agent can be added to the pressure-sensitive adhesive. The crosslinking agent includes a polyisocyanate compound, polyamine compound, melamine resin, urea resin, epoxy resin, metal salt and metal chelate. Further, tackifiers such as rosin resin, terpene resin, petroleum resin, phenol resin and chroman/indene resin, softening agents such as polyisobutylene, polyisoprene, polybutene and naphthene oil, plasticizers, fillers, antioxidants, UV absorbers, silane coupling agents etc. can be used if necessary in the pressure-sensitive adhesive.

The material forming the base material is not particularly limited, and examples include resin (including foam), rubber, metal, paper, cloth and nonwoven cloth. Particularly, resin film (sheet) is preferably used from the viewpoint of less generation of dust, operativeness and productivity.

The resin includes, for example, cellophane, polyethylene, polypropylene, ethylene/vinyl acetate copolymers, polystyrene, polyester, polyvinyl chloride, polyvinyl alcohol, nylon, acetate, polyimide, polycarbonate, polysulfone and polyphenylene sulfide, as well as fluorine-containing resin such as polytetrafluoroethylene and polyvinyl fluoride.

The shape of the base material is not particularly limited; for example, the base material may be in the form of roll, film, sheet or plate. From the viewpoint of operativeness, the pressure-sensitive adhesive sheet of the invention is preferably a rolled pressure-sensitive adhesive sheet obtained by rolling the sheet having the pressure-sensitive layer arranged on one side of the base material in a film or sheet form. In this case, the pressure-sensitive adhesive sheet preferably has a structure of a release agent layer/base material/undercoat layer/pressure-sensitive adhesive layer.

The thickness of the base material is not particularly limited, but is preferably about 25 to 200 µm, more preferably 25 to 150 µm, from the viewpoint of the retention, strength and pliability of the pressure-sensitive adhesive layer.

The release agent layer or the undercoat layer is preferably an antistatic layer. By arranging the antistatic layer on the surface of the base material, the pressure-sensitive adhesive layer can be prevented from being electrostatically charged, thus preventing adhesion of foreign matter such as dust to the surface of the pressure-sensitive adhesive layer. Thus, a reduction in the adhesion of the pressure-sensitive adhesive layer can be prevented, and contamination of the back substrate with foreign matter can be prevented. The antistatic layer may be arranged in either or both sides of the base material.

The antistatic layer can be formed by incorporating an antistatic agent such as a surfactant, electroconductive carbon and metallic powder into a usually used polymer such as polyester and applying the mixture on a base material, by applying a surfactant and electroconductive resin onto a base material and drying them, or by applying, vapor-depositing, or plating an electroconductive substance such as metal and an electroconductive oxide on a base material.

The antistatic agent may be any antistatic agent described above insofar as the necessary antistatic effect can be achieved.

The surfactant includes, for example, anionic or amphoteric compounds such as carboxylic acid compounds, sulfonic acid compounds and phosphate salts, cationic compounds such as amine compounds and quaternary ammonium salts, nonionic compounds such as aliphatic acid polyvalent alcohol ester compounds and polyoxyethylene adducts, and polymer compounds such as polyacrylic acid derivatives.

As the antistatic agent, a polymer having a pyrrolidium ring in its main chain is preferably used. The polymer having a pyrrolidium ring in its main chain includes, for example, "Sharol" manufactured by Dai-ichi Kogyo Seiyaku Co., Ltd. As the antistatic agent, a thermosetting antistatic agent prepared by compounding a polar material such as choline chloride, polyethylene imine and imidazole with an alkyl (meth)acrylate polymer and compounding a thermosetting resin such as epoxy resin with the resulting mixture can also be used. Such thermosetting antistatic agent includes, for example, Bondip series (Bondip PA-100, Bondip PX etc.) manufactured by Konishi.

For example, an antistatic agent having a polyvinyl alcohol-based polymer as a binder incorporated into a cationic compound such as a quaternary ammonium salt is also preferably used to improve the adhesion between the base material and the antistatic layer.

The electroconductive resin includes a resin having electroconductive fillers (for example, tin antimony fillers or indium oxide fillers) dispersed in a polymer.

The electroconductive material to be applied, vapor-deposited or plated includes tin oxide, indium oxide, cadmium oxide, titanium oxide, metal indium, metal tin, gold, silver, platinum, palladium, copper, aluminum, nickel, chromium, titanium, iron, cobalt, copper iodide, and alloys thereof and mixtures thereof. These materials may be used alone or as a mixture of two or more thereof. The vapor deposition and plating include vapor deposition, sputtering, ion plating, chemical vapor deposition, spray pyrolysis, chemical plating and electroplating.

The thickness of the antistatic layer is not particularly limited, but is preferably about 0.005 to 2 µm, more preferably about 0.01 to 1 µm.

The pressure-sensitive adhesive sheet of the present invention can be formed by applying the pressure-sensitive adhesive on a base material or an antistatic layer followed by drying or the like. The thickness of the pressure-sensitive adhesive layer should be more than 3 µm and less than 20 µm as described above.

The surface of the pressure-sensitive adhesive layer is preferably provided with a protective film. By arranging the protective film, foreign matter such as dust can be prevented from adhering to the surface of the pressure-sensitive adhesive layer. In the case of the rolled pressure-sensitive adhesive sheet, the protective film can be arranged to prevent incorporation of bubbles or wrinkling upon rolling. Particularly, a pressure-sensitive adhesive sheet of broad width is liable to incorporation of bubbles or wrinkling upon rolling, and thus the protective film is preferably arranged thereon. When the rolled pressure-sensitive adhesive sheet undergoes incorporation of bubbles or wrinkling upon rolling, the flatness of the pressure-sensitive adhesive layer is deteriorated. As a result, lifting occurs upon contacting the pressure-sensitive adhesive layer of the pressure-sensitive adhesive sheet with the top surface of a barrier rib of a back substrate, thus deteriorating adhesion to make complete removal of fluorescent substances on the top surface of the barrier rib difficult.

The material forming the protective film is not particularly limited, and can be the same material as in the base material. The surface of the protective film is subjected preferably to release treatment. The operation of releasing the protective film can thereby be easily carried out in order to stick the pressure-sensitive adhesive sheet onto the top surface of a barrier rib.

The thickness of the protective layer is not particularly limited, but is preferably about 25 to 100 µm from the viewpoint of strength and flexibility.

Now, one example of removing fluorescent substances on the top surface of a barrier rib by using the pressure-sensitive adhesive sheet of the present invention is described. For example, when the rolled pressure-sensitive adhesive sheet is used, a back substrate having a fluorescent paste layer formed inside a discharge cell divided with a barrier rib by a conventionally known method, or a back substrate having a fluorescent layer formed by further burning the fluorescent paste layer, is transferred at a constant speed on a belt conveyer or the like. The pressure-sensitive adhesive sheet is delivered at the same speed as the speed of the back substrate, and in a sticking step, the pressure-sensitive adhesive layer of the pressure-sensitive adhesive sheet is contacted with the top surface of the barrier rib. The contact pressure is preferably 0.1 to 2.0 N/m², more preferably 0.3 to 0.7 N/m². After the sticking step, the pressure-sensitive adhesive sheet is released from the back substrate and wound again in a rolled state. When the pressure-sensitive adhesive sheet of the present invention is used, only unnecessary fluorescent substances on the top surface of the barrier rib can be removed, and necessary fluorescent substances on the side of the barrier rib are not released. Accordingly, the problem of mixed color can be solved, and the emitting surface area (surface area of the fluorescent layer) can be increased to improve brightness.

### EXAMPLES

Hereinafter, the present invention is described in more detail by reference to the Examples, but the present invention is not limited thereto.

### [Measurement of glass transition temperature (Tg)]

An acrylic polymer solution was applied onto a polyethylene terephthalate (PET) film (thickness 38 µm) previously subjected to surface treatment with a release agent, and was dried at 130°C for 1 minute to remove the solvent, to form a resin layer (thickness 25 µm). Thereafter, the resin layer was covered with a release film previously subjected to surface treatment with a release agent, and was cured at 50°C for 4 days. The resin layer thus obtained was folded, and the folded resin layer of about 2 mm was punched off with φ7.9 mm, to give cylindrical pellets as sample for measurement of glass transition temperature (Tg). By using a dynamic viscoelasticity instrument, the loss elastic modulus G" of this sample was measured for temperature dependence, and the temperature at which the resulting G" curve became maximum was regarded as glass transition temperature (Tg).
Instrument: ARES manufactured by Rheometric Scientific
Measurement mode: Shearing mode
Temperature range: -70°C to 200°C
Heating rate: 5°C/min
Frequency: 1 Hz

### [Measurement of number-average molecular weight]

The number-average molecular weight of the acrylic polymer in the pressure-sensitive adhesive was measured by the following method. The acrylic polymer was dissolved at a concentration of 0.1 wt% in THF and subjected to GPC (gel permeation chromatography) to determine its polystyrene-equivalent number-average molecular weight. Detailed measurement conditions are as follows.
GPC unit: HLC-8120GPC manufactured by Tosoh
Columns: (GMHHR-H) + (GMHHR-H) + (G2000HHR) manufactured by Tosoh
Flow rate: 0.8 ml/min
Concentration: 0.1 wt%
Injection volume: 100 µl
Column temperature: 40°C
Eluent: THF

### [Measurement of adhesion]

The adhesion of the pressure-sensitive adhesive sheet was measured according to JIS ZO237 The test plate used was an SUS304 steel plate prescribed under JIS G4305 and previously polished with a water-resistant abrasive paper. Contact bonding was carried out by rolling a 2-kg rubber roller prescribed under JIS K6253, back and forth on the sample. The measurement device used was a tensile machine prescribed under JIS B7721. Then, loading (adhesion) upon release of the sample under the conditions of 23°C, a peel angle of 180° and a peel rate of 300 mm/min. was measured.

### [Evaluation of removability of fluorescent substance]

The pressure-sensitive adhesive sheet produced in each of the Examples and Comparative Examples was stuck on a barrier rib of a PDP back substrate (burned after injection of fluorescent substances) by a laminator. The laminator attachment conditions are: speed, 3 m/min.; pressure, 0.4 N/m²; and atmosphere temperature, 23°C. Immediately after attachment, the pressure-sensitive adhesive sheet was peeled off at a peel rate of 300 mm/min. at a direction of 180°. Thereafter, the top surface of the barrier rib was observed under a microscope and the state of removal of fluorescent substances was confirmed. The performance to remove fluorescent substances was evaluated under the following criteria:
o: Fluorescent substances on only the top surface of the barrier rib were removed, and fluorescent substances on the side of the barrier rib were not removed at all.
Δ: A very small amount of fluorescent substances on the top surface of the barrier rib remained, and fluorescent substances on the side of the barrier rib were not removed at all.
x: Not only fluorescent substances on the top surface of the barrier rib but also a part of fluorescent substances on the side of the barrier rib were removed.

### Production Example 1

100 parts by weight of butyl acrylate, 5 parts by weight of acrylic acid and 0.2 part by weight of benzoyl peroxide were added to 223 parts by weight of toluene and polymerized at 60°C for 7 hours, then at 80°C for 2 hours to give an acrylic polymer solution (number-average molecular weight 500,000). 2 parts by weight of polyisocyanate (Colonate L manufactured by Nippon Polyurethane Industry Co., Ltd.) and 0.05 part by weight of an epoxy crosslinking agent (TETRAD-C manufactured by Mitsubishi Gas Chemical Company, Inc.) were added to the above solution in an amount of 100 parts by weight of solids content in the solution, to give an acrylic pressure-sensitive adhesive A. The glass transition temperature (Tg) of the acrylic polymer was -58°C.

### Production Example 2 (Reference)

100 parts by weight of an acrylic pressure-sensitive adhesive (Rheocoat 1020, number-average molecular weight 850,000, manufactured by Daiichi Race) were dissolved in 400 parts by weight of toluene to give an acrylic polymer solution. 20 parts by weight of polyisocyanate (Colonate L manufactured by Nippon Polyurethane Industry Co., Ltd.) were added to the above solution in an amount of 100 parts by weight of solids content in the solution, to give an acrylic pressure-sensitive adhesive B. The glass transition temperature (Tg) of the acrylic polymer was -20°C.

### Example 1

The acrylic pressure-sensitive adhesive A was applied onto a base material made of polyethylene (thickness 100 µm) and dried to form a pressure-sensitive adhesive layer (thickness 5 µm), whereby a pressure-sensitive adhesive sheet was produced. The adhesion of the pressure-sensitive adhesive sheet was 4.0 (N/25 mm sheet width). The evaluation of removability of fluorescent substance: o.

### Example 2

A pressure-sensitive adhesive sheet was produced in the same manner as in Example 1 except that the thickness of the pressure-sensitive adhesive layer was 10 µm. The adhesion of the pressure-sensitive adhesive sheet was 4.4 (N/25 mm sheet width). The evaluation of removability of fluorescent substance: o.

### Example 3

The acrylic pressure-sensitive adhesive A was applied onto a base material made of PET (thickness 38 µm) and dried to form a pressure-sensitive adhesive layer (thickness 10 µm), whereby a pressure-sensitive adhesive sheet was produced. The adhesion of the pressure-sensitive adhesive sheet was 5.0 (N/25 mm sheet width). The evaluation of removability of fluorescent substance: o.

### Example 4 (Reference)

The acrylic pressure-sensitive adhesive B was applied onto a base material made of PET (thickness 38 µm) and dried to form a pressure-sensitive adhesive layer (thickness 10 µm), whereby a pressure-sensitive adhesive sheet was produced. The adhesion of the pressure-sensitive adhesive sheet was 2.8 (N/25 mm sheet width). The evaluation of removability of fluorescent substance: **Δ**.

### Example 5

The acrylic pressure-sensitive adhesive A was applied onto a base material made of PET (thickness 38 µm) and then dried to form a pressure-sensitive adhesive layer (thickness 10 µm). Thereafter, a protective film made of PET (thickness of 25 µm) was laminated on the pressure-sensitive adhesive layer and simultaneously wound in a rolled state to produce a rolled pressure-sensitive adhesive sheet. No bubble or wrinkling occurred in the rolled pressure-sensitive adhesive sheet. Foreign matter hardly adhered to the surface of the pressure-sensitive adhesive layer in the pressure-sensitive adhesive sheet during use. The adhesion of the pressure-sensitive adhesive sheet was 5.0 (N/25 mm sheet width). The evaluation of removability of fluorescent substance: o.

### Example 6

A base material consisting of a polyester film having an antistatic layer arranged on side thereof (T100G, thickness 38 µm, manufactured by Mitsubishi Kagaku Polyester) was coated on the other side with the acrylic pressure-sensitive adhesive A and then dried to form a pressure-sensitive adhesive layer (thickness 10 µm). Thereafter, a protective film made of PET (thickness 25 µm) was laminated on the pressure-sensitive adhesive layer and simultaneously wound in a rolled state to produce a rolled pressure-sensitive adhesive sheet. No bubble or wrinkling occurred in the rolled pressure-sensitive adhesive sheet. The pressure-sensitive adhesive sheet did not generate static electricity during use, and no foreign matter adhered to the surface of the pressure-sensitive adhesive layer. Accordingly, the contamination of the back substrate with foreign matter could be effectively prevented. The adhesion of the pressure-sensitive adhesive sheet was 5.0 (N/25 mm sheet width). The evaluation of removability of fluorescent substance: o.

### Comparative Example 1

A pressure-sensitive adhesive sheet was produced in the same manner as in Example 3 except that the thickness of the pressure-sensitive adhesive layer was 30 µm. The adhesion of the pressure-sensitive adhesive sheet was 11.5 (N/25 mm sheet width). The evaluation of removability of fluorescent substance: x.

### Comparative Example 2

The acrylic pressure-sensitive adhesive B was applied onto a base material made of polyethylene (thickness 100 µm) and dried to form a pressure-sensitive adhesive layer (thickness 30 µm), whereby a pressure-sensitive adhesive sheet was produced. The adhesion of the pressure-sensitive adhesive sheet was 6.5 (N/25 mm sheet width). The evaluation of removability of fluorescent substance: x.

As is evident from the Examples and Comparative Examples, only unnecessary fluorescent substances on the top surface of a barrier rib can be removed by regulating the thickness of the pressure-sensitive adhesive layer in the range of more than 3 µm and less than 20 µm.

## Claims

1. A pressure-sensitive adhesive sheet used for removing fluorescent substances adhering to a barrier rib of a plasma display panel back substrate and having at least a pressure-sensitive adhesive layer on one side of a base material, wherein the thickness of the pressure-sensitive adhesive layer is more than 3 µm and less than 20 µm, the glass transition temperature (Tg) of a base polymer in the pressure-sensitive adhesive as a material forming the pressure-sensitive adhesive layer is lower than -30°C and which exhibits an adhesion of 4 to 10 [N/25 mm sheet width] upon release under the conditions of 23°C, a peel angle of 180° and a peel rate of 300 mm/min.

2. The pressure-sensitive adhesive sheet for removal of fluorescent substances according to claim 1, wherein an antistatic layer is arranged on the surface of the base material.

3. The pressure-sensitive adhesive sheet for removal of fluorescent substances according to claim 1, wherein a protective film is arranged on the surface of the pressure-sensitive adhesive layer.

4. A method of removing fluorescent substances on the top surface of a barrier rib of a plasma display panel back substrate, which comprises bringing the pressure-sensitive adhesive layer of the pressure-sensitive adhesive sheet for removal of fluorescent substances according to claim 1 into contact with the top surface of a barrier rib of a plasma display panel back substrate, and then releasing the pressure-sensitive adhesive sheet to remove fluorescent substances on the top surface of the barrier rib.

5. A method of producing a plasma display panel back substrate, which comprises bringing the pressure-sensitive adhesive layer of the pressure-sensitive adhesive sheet for removal of fluorescent substances according to claim 1 into contact with the top surface of a barrier rib of a plasma display panel back substrate, and then releasing the pressure-sensitive adhesive sheet to remove fluorescent substances on the top surface of the barrier rib.

## Patentansprüche

1. Haftklebstofffolie zum Entfernen fluoreszierender Stoffe, welche an einer Sperrlamelle eines Hintergrundsubstrats eines Plasmabildschirms haften, wobei die Folie mindestens eine Haftklebstoffschicht auf einer Seite eines Grundwerkstoffs besitzt, wobei die Dicke der Haftklebstoffschicht mehr als 3 *µ*m und weniger als 20 *µ*m beträgt, die Glasübergangstemperatur (Tg) eines Basispolymers im Haftklebstoff, welcher die Haftklebstoffschicht bildet, weniger als -30° ist, und welche eine Haftwirkung von 4 bis 10 [N/25 mm Folienweite] bei Ablösung unter folgenden Bedingungen aufweist: 23°C, ein Abziehwinkel von 180° und eine Abziehrate von 300 mm/Minute.

2. Haftklebstofffolie zum Entfernen fluoreszierender Stoffe gemäß Anspruch 1, wobei eine Antistatikschicht auf der Oberfläche des Grundwerkstoffs aufgebracht ist.

3. Haftklebstofffolie zum Entfernen fluoreszierender Stoffe gemäß Anspruch 1, wobei ein Schutzfilm auf der Oberfläche der Haftklebstoffschicht aufgebracht ist.

4. Verfahren zum Entfernen fluoreszierender Stoffe auf der oberen Oberfläche einer Sperrlamelle eines Hintergrundsubstrats eines Plasmabildschirms, welches das in Kontakt bringen der Haftklebstoffschicht der Haftklebstofffolie zum Entfernen fluoreszierender Stoffe gemäß Anspruch 1 mit der oberen Oberfläche einer Sperrlamelle eines Hintergrundsubstrats eines Plasmabildschirms und das anschließende Ablösen der Haftklebstofffolie zum Entfernen fluoreszierender Stoffe auf der oberen Oberfläche der Sperrlamelle beinhaltet.

5. Verfahren zur Herstellung eines Hintergrundsubstrats eines Plasmabildschirms, welches das in Kontakt bringen der Haftklebstoffschicht der Haftklebstofffolie zum Entfernen fluoreszierender Stoffe gemäß Anspruch 1 mit der oberen Oberfläche einer Sperrlamelle eines Hintergrundsubstrats eines Plasmabildschirms und das anschließende Ablösen der Haftklebstofffolie zum Entfernen fluoreszierender Stoffe auf der oberen Oberfläche der Sperrlamelle beinhaltet.

## Revendications

1. Feuille adhésive sensible à la pression destinée à enlever des substances fluorescentes adhérant à une nervure de barrage d'un substrat arrière d'écran à plasma et ayant au moins une couche adhésive sensible à la pression sur un côté d'un matériau de base, dans laquelle l'épaisseur de la couche adhésive sensible à la pression est supérieure à 3 µm et inférieure à 20 µm, la température de transition vitreuse (Tg) d'un polymère de base dans l'adhésif sensible à la pression en tant que matériau formant la couche adhésive sensible à la pression est inférieure à -30°C, et qui présente une adhésion de 4 à 10 [N/25 mm de largeur de feuille] lors de la libération dans des conditions de 23°C, un angle d'exfoliation (peel angle) de 180° et une vitesse d'exfoliation de 300 mm/min.

2. Feuille adhésive sensible à la pression destinée à enlever des substances fluorescentes selon la revendication 1, dans laquelle une couche antistatique est disposée sur la surface du matériau de base.

3. Feuille adhésive sensible à la pression destinée à enlever des substances fluorescentes selon la revendication 1, dans laquelle un film protecteur est disposé sur la surface de la couche adhésive sensible à la pression.

4. Procédé pour enlever des substances fluorescentes sur la surface supérieure d'une nervure de barrage d'un substrat arrière d'un écran à plasma, qui comprend la mise en contact de la couche adhésive sensible à la pression de la feuille adhésive sensible à la pression destinée à enlever des substances fluorescentes selon la revendication 1 avec la surface supérieure d'une nervure de barrage d'un substrat arrière d'un écran à plasma, et ensuite la libération de la feuille adhésive sensible à la pression pour enlever des substances fluorescentes sur la surface supérieure de la nervure de barrage.

5. Procédé de production d'un substrat arrière d'un écran à plasma, qui comprend la mise en contact de la couche adhésive sensible à la pression de la feuille adhésive sensible à la pression destinée à enlever des substances fluorescentes selon la revendication 1 avec la surface supérieure d'une nervure de barrage d'un substrat arrière d'un écran à plasma, et ensuite la libération de la feuille adhésive sensible à la pression pour enlever les substances fluorescentes sur la surface supérieure de la nervure de barrage.
